# EUROPEAN PATENT APPLICATION

(11) **EP 3 767 598 A1**
(43) Date of publication of application: **20.01.2021**
(21) Application number: 19768635.5
(22) Date of filing: 08.03.2019
(51) Int. Cl.: G07F 11/04

(54) **VENDING DEVICE AND METHOD**

(30) Priority: 12.03.2018 CN 201810201965
(71) Applicant: Deepblue Technology (Shanghai) Co., Ltd., Changning District, Shanghai 200336 (CN)
(72) Inventor: LUO, Zhongwei, Shanghai 200336 (CN)
(74) Representative: RGTH
(86) International application number: PCT/CN2019/077550
(87) International publication number: WO 2019/174529

(57) **Abstract**

Disclosed are a vending device and method. The vending device comprises a control module (1), a cabinet (2), at least one cabinet door (3), and at least one camera module (4), which is connected to the control module (1). The camera module (4) is mounted on an inner wall (21) of the cabinet (2), and is used for capturing a goods pickup image of a user taking goods out of the cabinet (2) and from a goods shelf (5). The control module (1) is used for unlocking the cabinet door (3) and starting the camera module (4) when an access command from the user is received; the control module (1) is further used for capturing, via the camera module (4), the goods pickup image of the user taking the goods out of the cabinet (2) and from the goods shelf (5); and the control module (1) is further used for completing a payment trade with a bound payment account of the user at least according to the goods pickup image when it is detected that the cabinet door (3) is locked. A user can actually touch and choose an object he/she requires, and automatic settlement is realized upon taking the object away and closing the door, thereby eliminating a cash or mobile phone payment process by the user. Moreover, there is no risk of an object getting stuck.

## Description

The present application claims priority of Chinese Patent Application No. 201810201965.5, filed with the China Patent Office on March 12, 2018 and entitled "VENDING DEVICE AND METHOD", which is incorporated herein by reference in its entirety.

### Field

The present application relates to the field of automation devices, in particular to a vending device and method.

### Background

Nowadays, in a society where the Internet is popular, people's shopping manners are becoming more diversified. Self-shopping has become an increasingly popular shopping manner. The existing self-shopping manners are generally implemented by self-service vending machines. When needing to purchase objects from a self-service vending machine, a user first operates on an operation panel of the self-service vending machine to select an object, then puts a banknote into a banknote inlet of the vending machine or scans a payment QR code by a mobile terminal to make payment, and finally, takes the selected object from a pickup port of the vending machine.

The inventor finds that there are at least the following problems in the prior art: firstly, for the existing self-service vending machine, the purchase operation process of the user is very cumbersome and complicated; secondly, the user can only observe a required object through the glass of the self-service vending machine, and cannot see some detailed information of the required object, such as a manufacturer, a production date, and a shelf life; and finally, after the payment is completed, the object falls from a shopping channel to the pickup port by mechanically pushing a spring to rotate, and there is a risk of the object being stuck.

### Summary

An objective of the embodiments of the present application is to provide a vending device and method, through which a user can actually touch and choose goods needed by the user, take the goods away and close a door to implement automatic settlement, so that a process that the user performs a cash or mobile phone payment is eliminated. In addition, there is no risk of the goods getting stuck.

To solve the above technical problems, embodiments of the present application provide a vending device, including: a control module, a cabinet, at least one cabinet door, and at least one camera module connected to the control module, wherein the cabinet is provided with a goods shelf configured to place goods, and cabinet doors and camera modules are same in number and are in one-to-one correspondence; the cabinet door is connected to the cabinet, when the cabinet door is locked, a user is prohibited from taking goods out from the goods shelf, and when the cabinet door is unlocked, the user picks up the goods from the goods shelf; the camera module is installed on an inner wall of the cabinet, and is configured to capture goods pickup image of the user taking the goods out of the cabinet from the goods shelf; the control module is configured to, when an access command from the user is received, unlock the cabinet door and start the camera module; the control module is further configured to capture the goods pickup image of the user taking the goods out of the cabinet from the goods shelf by the camera module; and the control module is further configured to complete a payment transaction with a bound payment account of the user at least according to the goods pickup image when it is detected that the cabinet door is locked.

An embodiment of the present application further provides a vending method which is applied to a vending device, and the vending device includes: a control module, a cabinet, at least one cabinet door, and at least one camera module, and the cabinet is provided with a goods shelf configured to place goods; and the method includes: when an access command from a user is received, unlocking the cabinet door and starting the camera module; capturing, by the camera module, a goods pickup image of the user taking the goods out of the cabinet from the goods shelf; and when it is detected that the cabinet door is locked, completing a payment transaction with a bound payment account bound of the user at least according to the goods pickup image.

Compared with the prior art, in some embodiments of the present application, when the access command from the user is received, the cabinet door is unlocked and the camera module is started, so that the goods pickup image of the user taking the goods out of the cabinet from the goods shelf is captured by the camera module. When it is detected that the cabinet door is locked, it indicates that the user has completes goods pickup, and completes the payment transaction with the bound payment account of the user at least according to the goods pickup image. Therefore, the user can actually touch and choose the goods needed by the user, take the goods away and close the door to implement automatic settlement, so that a process that the user performs a cash or mobile payment is eliminated. It is very convenient for the user to complete the entire shopping link by only opening the door, picking up the goods, and closing the door, so that shopping experience of the user is improved. In addition, there is no risk of the goods getting stuck.

In addition, the vending device further includes several gravity sensors connected to the control module, and the several gravity sensors are arranged at a bottom of the goods shelf; the several gravity sensors are configured to detect weight change information of the goods shelf; and the control module is specifically configured to complete the payment transaction with the bound payment account of the user according to the weight change information and the goods pickup image. In some embodiments, the gravity sensors are installed at the bottom of the goods shelf to detect the weight change information of the goods shelf. When the weight of the goods shelf decreases, it indicates the user takes the goods out. The weight change information and the goods pickup image are combined, so that accuracy of determining whether the user takes the goods out is improved.

In addition, the goods shelf includes a plurality of goods lanes; each of the goods lanes is configured to place the goods; the vending device further includes a plurality of distance sensors connected to the control module, and the distance sensors and the goods lanes are same in number and are in one-to-one correspondence; each of the distance sensors is fixed to a rear end of the corresponding goods lane, and each of the distance sensors is configured to obtain distance change information between the goods on the corresponding goods lane and the rear end of the corresponding goods lane; and the control module is specifically configured to complete the payment transaction with the bound payment account of the user according to the distance change information and the goods pickup image. In some embodiments, each distance sensor is installed at the rear end of each goods lane to collect the distance change information between the rear end of the goods lane and the goods. When the distance becomes larger, it indicates that the user takes the goods out. The distance change information and the goods pickup image are combined, so that accuracy of determining whether the user takes the goods out is improved.

In addition, the camera module includes two cameras; one of the cameras is arranged on a top end of an inner wall, and the other camera is arranged in the middle of the inner wall; and lenses of the cameras are non-wide-angle lenses, and an angle between a main optical axis of one of the cameras and the inner wall is in a range of 45 degree to 55 degree, and an angle between a main optical axis of the other camera and the inner wall is in a range of [35 degree, 45 degree]. This embodiment provides a specific structure of the camera module and an installation manner of the cameras in the camera module.

In addition, a lens angle of each of the cameras is in a range of 16 degree to 49 degree. The embodiment provides a specific range of the lens angle of each camera.

In addition, the number of cabinet doors is two, and each of the cabinet doors is rotationally connected to an inner wall of the cabinet. This embodiment provides a vending device with two cabinet doors.

In addition, the vending device further includes a communication module, the control module is connected to a cloud server by the communication module, and the control module is configured to obtain goods information of the goods according to the goods pickup image, sends the goods information and the bound payment account of the user to the cloud server, and completes the payment transaction by the cloud server. This embodiment provides a specific implementation for completing a payment transaction by a user.

In addition, the vending device further includes an information input device connected to the control module, and the information input device is fixed to an outer wall of the cabinet; and the control module is specifically configured to receive an access command from the user by the information input device, verify the user by the cloud server when the access command is received, and unlock the cabinet door when the verification passes, and start the camera module. This embodiment provides a specific implementation manner for receiving an access command from a user.

In addition, the cabinet is further provided with an identification code; and when the user uses a mobile terminal to scan the identification code, the mobile terminal sends login information to the cloud server, the cloud server verifies the login information, and when the verification passes, the cloud server sends the access command from the user to the control module. This embodiment provides another specific implementation manner for receiving an access command from a user.

In addition, the information input device is at least one of the following elements: a touch panel, a fingerprint recognition sensor, an iris recognition sensor, a face recognition sensor, or a palm print recognition sensor. This embodiment provides specific types of information input devices.

In addition, an embodiment of the present application provides a computer storage medium with a computer program stored thereon, and the program is executed by a processor to implement the steps of the vending method.

### Brief Description of the Drawings

One or more embodiments are exemplified by figures in accompanying drawings corresponding to the one or more embodiments. These exemplified descriptions do not constitute a limitation on the embodiments. Elements with the same reference numerals in the accompanying drawings indicate similar elements. Unless otherwise stated, the figures in the accompanying drawings do not constitute a limitation of scale.
FIG. 1 is a block diagram of a vending device according to a first embodiment of the present application;
FIG. 2 is a front schematic diagram of the vending device according to the first embodiment of the present application;
FIG. 3 is a schematic diagram of installation of a camera according to the first embodiment of the present application;
FIG. 4 is a block diagram of a vending device according to a second embodiment of the present application;
FIG. 5 is a side schematic diagram of the vending device according to the second embodiment of the present application;
FIG. 6 is a block diagram of a vending device according to a third embodiment of the present application;
FIG. 7 is a schematic diagram of a goods lane of a goods shelf of the vending device according to the third embodiment of the present application;
FIG. 8 is a block diagram of a vending device according to a fourth embodiment of the present application;
FIG. 9 is a block diagram of the vending device according to the fourth implementation of the present application, wherein a control module receives an access command from a user by an information input device;
FIG. 10 is a specific flowchart of a vending method according to a fifth embodiment of the present application;
FIG. 11 is a specific flowchart of a vending method according to a sixth embodiment of the present application;
FIG. 12 is a specific flowchart of a vending method according to a seventh embodiment of the present application; and
FIG. 13 is a specific flowchart of a vending method according to an eighth embodiment of the present application.

### Detailed Description of the Embodiments

In order to make the objectives, technical solutions, and advantages of the embodiments of the present application clearer, various embodiments of the present application are described in detail below with reference to the accompanying drawings. However, those of ordinary skill in the art can understand that in some embodiments of the present application, many technical details are provided for readers to better understand the present application. However, even without these technical details and various changes and modifications based on the following embodiments, the technical solutions protected in the present application can be implemented.

A first embodiment of the present application relates to a vending device, including: a control module, a cabinet, at least one cabinet door, and at least one camera module connected to the control module. The cabinet is provided with a goods shelf configured to place goods, and cabinet doors and camera modules are same in number, and are in one-to-one correspondence. The cabinet door is connected to the cabinet, when the cabinet door is locked, a user is prohibited from taking the goods out from the goods shelf, and when the cabinet door is unlocked, the user picks up the goods from the goods shelf. The camera module is installed on an inner wall of the cabinet, and is configured to capture a goods pickup image of the user taking the goods out of the cabinet from the goods shelf. The control module is configured to, when an access command from the user is received, unlock the cabinet door and start the camera module. The control module is further configured to capture the goods pickup image of the user taking the goods out of the cabinet from the goods shelf. The control module is further configured to complete a payment transaction with a bound payment account of the user at least according to the goods pickup image when it is detected that the cabinet door is locked.

Compared with the prior art, in some embodiments of the present application, when the access command from the user is received, the cabinet door is unlocked, and the camera module is started, so that the goods pickup image of the user taking the goods out of the cabinet from the goods shelf can be captured by the camera module. When it is detected that the cabinet door is locked, it indicates that the user completes the goods pickup, and completes the payment transaction with the bound payment account of the user at least according to the goods pickup image. Therefore, the user can actually touch and choose the goods needed by the user, take away the goods and close the door to implement automatic settlement, so that a process that the user performs a cash or mobile payment is eliminated. It is very convenient for the user to complete the entire shopping link by only opening the door, picking up the goods, and closing the door, so that shopping experience of the user is improved. In addition, there is no risk of the goods getting stuck.

The implementation details of the vending device of the embodiment are described in detail below. The following contents are only implementation details provided for ease of understanding and are not necessary for implementing this solution.

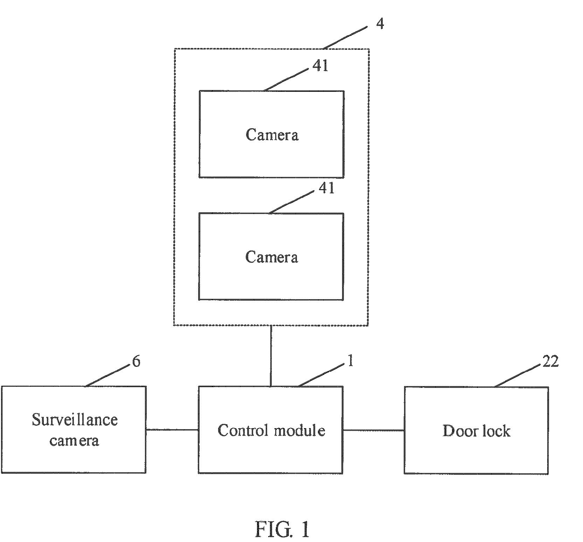

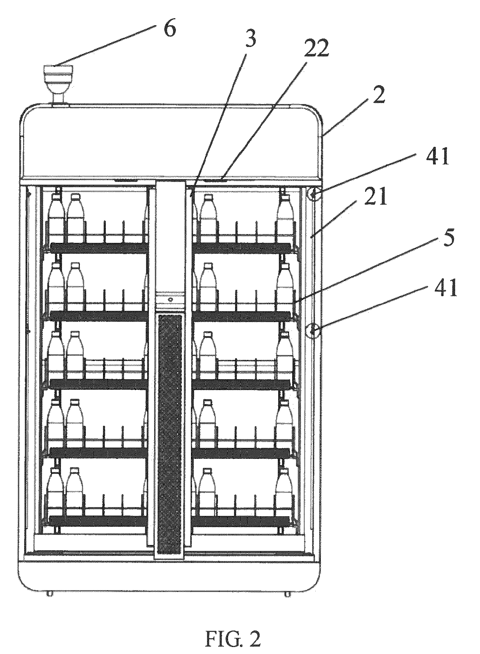

In some embodiments, referring to FIG. 1 and FIG. 2, the vending device includes a control module 1, a cabinet 2, at least one cabinet door 3, and a camera module 4. The camera module 4 is connected to the control module 1. The cabinet 2 is provided with a goods shelf 5 configured to place goods, the cabinet door 3 is connected to the cabinet 2, and cabinet doors 3 and camera modules 4 are same in number and are in one to-one correspondence. In this embodiment and the following embodiments, bottled beverages are configured as an example of the goods, but the goods is not limited thereto. The goods can further be in other types, such as snacks and biscuits. In some embodiments, the cabinet 2 is provided with a door lock 22 that can lock the cabinet door 3. When the cabinet door 3 is locked, the user is prohibited from opening the cabinet door 3 to pick up the goods from the goods shelf 5. When the cabinet door 3 is unlocked, the user can open the cabinet door 3 to pick up the goods from the goods shelf 5.

In some embodiments, the camera module 4 is installed on an inner wall 21 of the cabinet 2 and is configured to capture a goods pickup image of the user taking the goods out of the cabinet 2 from the goods shelf 5.

In an example, the number of cabinet doors 3 is two, and each cabinet door 3 is rotationally connected to the inner wall 21 of the cabinet 2, and the two cabinet doors 3 are respectively rotationally connected to two inner walls 21 of the cabinet 2. The user can open cabinet doors 3 from a part between the two cabinet doors 3. In this case, camera modules 4 are installed on the two inner walls 21 of the cabinet 2.

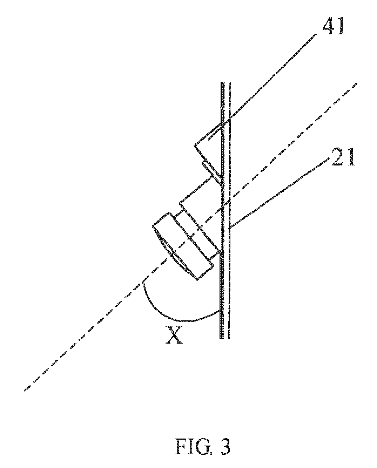

In an example, the camera module 4 includes two cameras 41, one of the cameras 41 is arranged on a top end of the inner wall 21 of the cabinet 2, and an angle between a main optical axis of the camera 41 and the inner wall 21 is in a range of [45 degree, 55 degree], for example, 50 degree. The other camera 41 is arranged in the middle of the inner wall 21, an angle between a main optical axis of the camera 41 and the inner wall 21 is in a range of [35 degree, 45 degree], for example, 40 degree. Referring to FIG. 3 which is a schematic diagram of the cameras 41 installed on the inner wall 21, a dotted line represents the main optical axis of the cameras 41, and X represents the angle between the main optical axis of one camera 41 and the inner wall 21.

In some embodiments, a lens of each camera 41 is a non-wide-angle lens. Optionally, a lens angle of each camera is in a range of [16 degree, 49 degree]. In some embodiments, that the camera module 4 includes two cameras 41 is configured as an example, but the camera module 4 is not limited thereto. The number of cameras included in the camera module 4 needs to be set according to a height of the goods shelf. The higher the goods shelf is, the larger the number of cameras is. It should be noted that, in some embodiments, the lenses of the cameras in the camera module 4 are non-wide-angle lenses, but the lens is not limited thereto. Alternatively, the lens of the camera in the camera module 4 may be a wide-angle lens. In this case, the camera module 4 can include only one camera.

In some embodiments, when receiving the access command from the user, the control module 1 controls the door lock 22 to be opened to unlock the cabinet door 3 and starts each camera 41 in the camera module 4. When the user opens the cabinet door 3, and picks up the goods from goods shelf 5, the control module 1 uses each camera 41 in the camera module 4 to capture a goods pickup image of the user taking the goods out of the cabinet from the goods shelf 5. Then, when the user closes the cabinet door 3, the door lock 22 automatically locks the cabinet door 3. When detecting that the cabinet door 3 is locked, the control module 1 completes the payment transaction with the bound payment account of the user at least according to the goods pickup image, wherein the control module 1 obtains the bound payment account of the user from the access command from the user. Within a preset time after the user takes the goods out, even if the cabinet door 3 is not closed, the control module 1 completes the payment transaction with the bound payment account of the user. Optionally, an automatic return structure is set on the cabinet door 3 to make the cabinet door 3 automatically return to a closed state, so that the user can be prevented from forgetting to close the cabinet door 3 after picking up the goods.

In an example, the control module 1 includes a central processing unit and a graphics processing unit. The central processing unit is configured to process data, and the graphics processing unit is configured to process the goods pickup image.

Optionally, the vending device further includes a surveillance camera 6 fixed on the cabinet 2, the surveillance camera 6 is connected to the control module 1, and is configured to record images near the vending device.

In an example, the vending device further includes a lighting device (not shown in the figure), the lighting device is fixed on the inner wall of the cabinet 2, and the lighting device is, for example, a light emitting diode (LED) lamp.

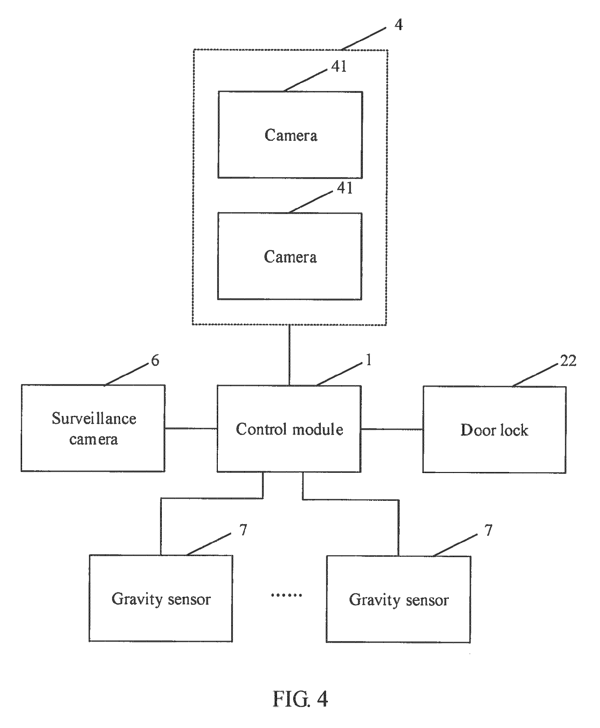

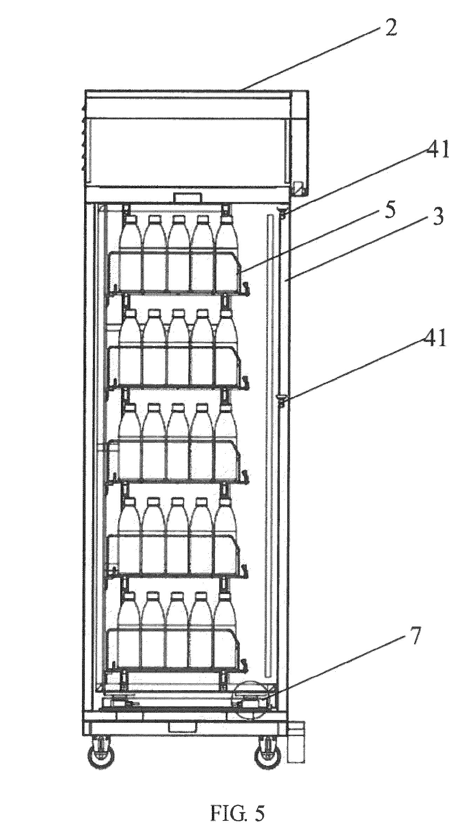

A second embodiment of the present application relates to a vending device. The second embodiment is an improvement on the basis of the first embodiment. The main improvement is as follows: in some embodiments, referring to FIG. 4 and FIG. 5, the vending device further includes several gravity sensors 7, and the several gravity sensors are arranged at a bottom of the goods shelf 5 and connected to the control module 1.

In an example, the vending device includes four gravity sensors 7, and the four gravity sensors 7 are respectively arranged at four corners of the bottom of the goods shelf 5.

The several gravity sensors 7 are configured to detect weight change information of the goods shelf 5. In a period in which the cabinet door 3 changes from an unlocked state to a locked state, and when the several gravity sensors 7 detect that the weight of the goods shelf 5 is reduced, it indicates that the user takes the goods out from the goods shelf 5. When the several gravity sensors 7 detect that the weight of the goods shelf 5 does not change, it indicates that the user does not take the goods out from the goods shelf 5.

The control module 1 is specifically configured to complete the payment transaction with the bound payment account of the user according to the weight change information and the goods pickup image.

Compared with the first embodiment, the embodiment is characterized in that the gravity sensor is provided at the bottom of the goods shelf to detect the weight change information of the goods shelf. When the weight of the goods shelf decreases, it indicates that the user takes goods out. The weight change information and the goods pickup image are combined, so that accuracy of determining whether the user takes the goods out is improved.

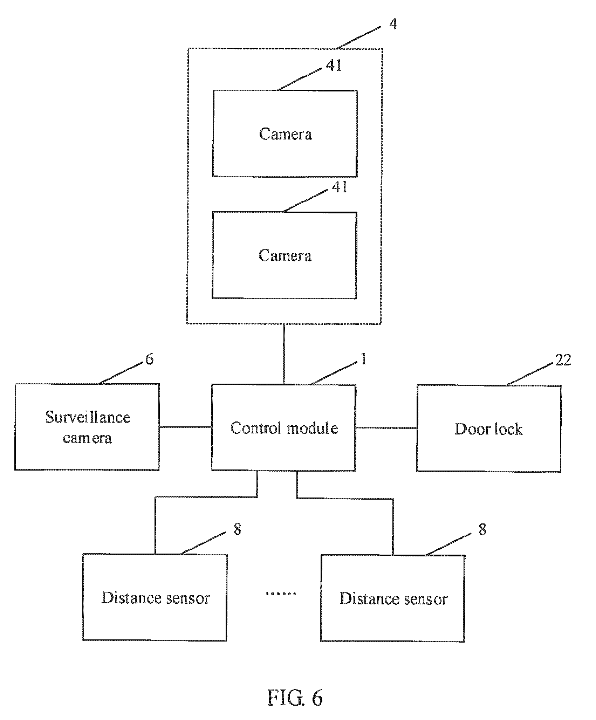

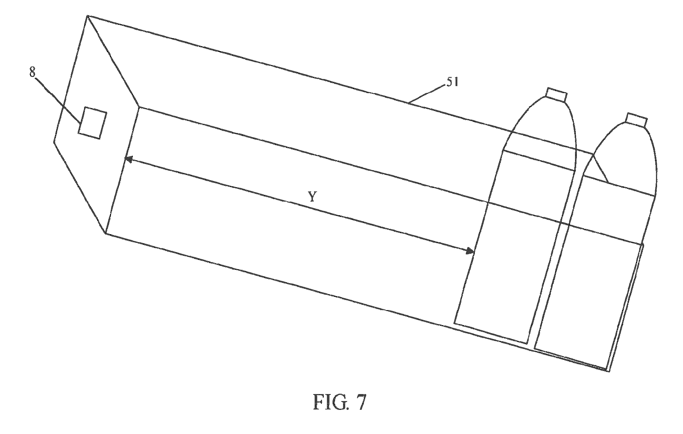

A third embodiment of the present application relates to a vending device. The third embodiment is an improvement on the basis of the first embodiment. The main improvement is as follows: in some embodiments, referring to FIG. 6 and FIG. 7, the vending device further includes a plurality of distance sensors 8.

In some embodiments, the goods shelf 5 includes a plurality of goods lanes 51, the goods lanes 51 are configured to place goods, each of the goods lanes 51 inclines downward toward the cabinet door 3, and the distance sensors 8 and the goods lanes 51 are same in number and are in one-to-one correspondence. Each distance sensor 8 is fixed to a rear end of the corresponding goods lane 51 and connected to the control module 1.

Each distance sensor 8 is configured to obtain distance change information between the goods on the corresponding goods lane 51 and the rear end of the corresponding goods lane 51. Referring to FIG. 7, one goods lane 51 is configured as an example, and Y represents a distance between the rear end of the goods lane and the goods. Because the goods lane 51 inclines downward toward the cabinet door 3, when one of the goods is taken out, the following goods slide downward under the action of gravity. In this case, the distance Y between the goods and the rear end of the goods lane 51 increases. That is, when the distance change information obtained by the distance sensor 8 is that the distance increases, it indicates that the one of goods on the goods lane 51 corresponding to the distance sensor 8 is taken out; otherwise, it indicates that no goods is taken out.

The control module 1 is configured to complete the payment transaction with the bound payment account of the user according to the distance change information and the goods pickup image.

Compared with the first embodiment, the embodiment is characterized in that the distance sensor is arranged at the rear end of each goods lane to collect the distance change information between the rear end of the goods lane and the goods. When the distance becomes larger, it indicates that the user has taken the goods out. The distance change information and the goods pickup image are combined, so that accuracy of determining whether the user takes the goods out is improved. It should be noted that the embodiment can also be configured as an improvement on the basis of the second embodiment to achieve the same technical effect.

A fourth embodiment of the present application relates to a vending device. The fourth embodiment is a refinement on the basis of the first embodiment, and the main refinement is as follows: a specific implementation manner for completing a payment transaction by a user is provided.

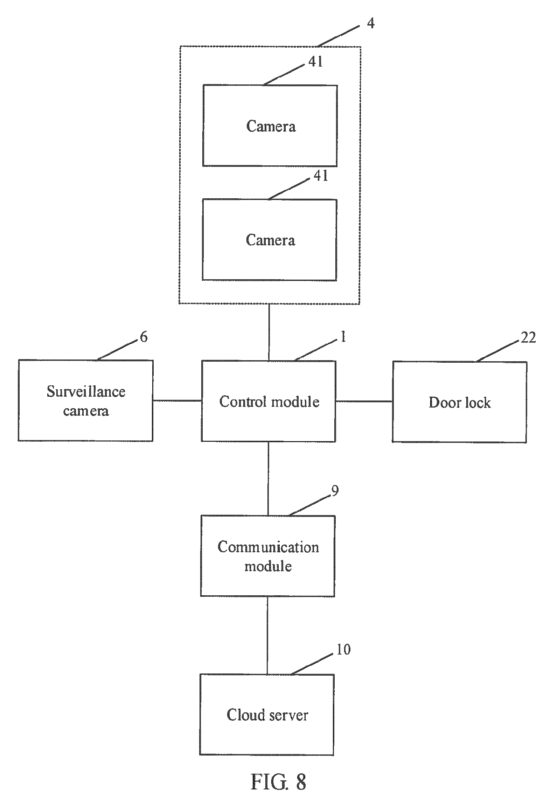

In some embodiments, referring to FIG. 8, the vending device further includes a communication module 9, the communication module 9 is, for example, a wireless network interface card, and the control module 1 is connected to a cloud server 10 by the communication module 9.

The control module 1 is configured to obtain goods information of the goods taken out according to the goods pickup image, and send the goods information and the bound payment account of the user to the cloud server 10, so that the payment transaction is completed by the cloud server 10, that is, according to the price of the goods in the goods information, money for buying the goods is deducted from the bound payment account of the user.

When the control module 1 receives the access command from the user, information about the bound payment account of the user is obtained from the access command from the user. There are two manners for the control module 1 to receive the access command from the user, which are specifically as follows.

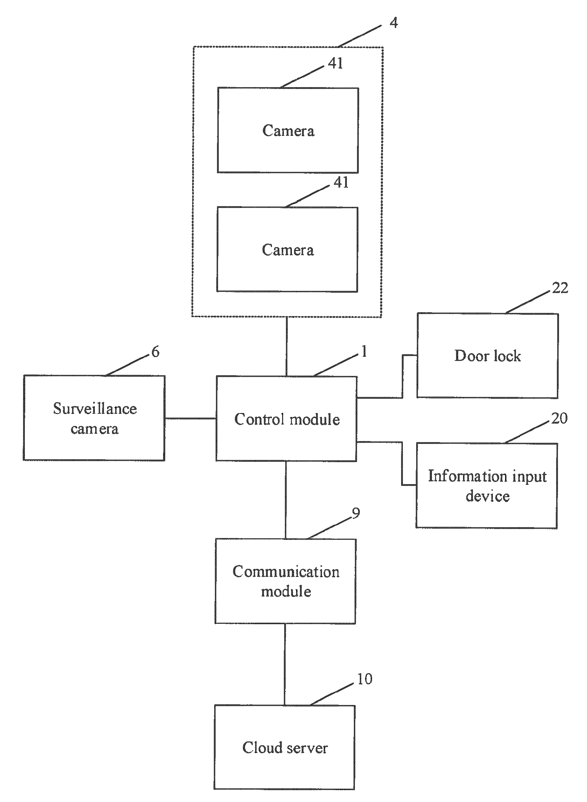

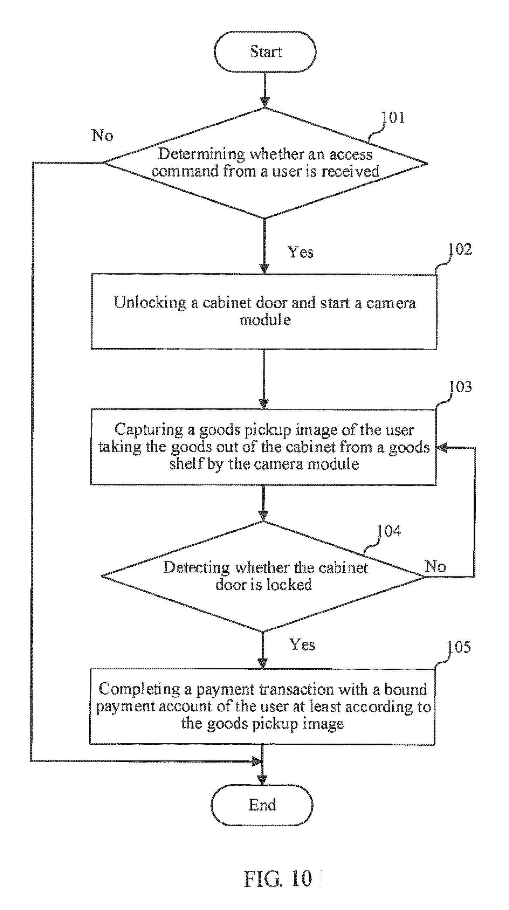

In a first manner, referring to FIG. 9, the vending device further includes an information input device 20 connected to the control module 1, and the information input device 20 is fixed to an outer wall of the cabinet 2. The information input device 20 is any one or combination of the following elements: a touch panel, a fingerprint recognition sensor, an iris recognition sensor, a face recognition sensor, and a palm print recognition sensor.

The control module 1 receives the access command from the user by the information input device 20, when the access command from the user is received, the user is verified by the cloud server 10, and when the verification passes, the cabinet door 3 is unlocked and the camera module 4 is started. Specifically, the cloud server 10 stores account information of all users, and the control module 1 sends login information of the user included in the access command from the user to the cloud server 10 for verification. When the verification passes, the control module 1 unlocks the cabinet door 3 and starts camera module 4. When the information input device 20 is a touch panel, the user can directly log in a registered account on the touch panel. When the information input device 20 is a fingerprint recognition sensor, an iris recognition sensor, a face recognition sensor, or a palm print recognition sensor, when the user registers for an account, corresponding biometric information is already bound with the account, so that the account can be logged in by the biometric information.

In the second manner, an identification code is further set on the cabinet 2, and the identification code can be a QR code, a barcode, or the like. When the user uses a mobile terminal to scan the identification code, the mobile terminal sends login information to the cloud server 10, and the cloud server 10 stores account information of all users, so that the login information can be verified. When the verification passes, the cloud server 10 sends the access command from the user to the control module 1. When the access command from the user sent by the cloud server 10 is received, the control module 1 unlocks the cabinet door 3 and starts the camera module 4. The identification code can also be displayed on a touch panel. When the user uses the mobile terminal to scan the identification code, the user can use an exclusive application of the vending device to perform scanning, which is not limited thereto. Applications such as WeChat and Alipay can also be used to perform scanning.

Compared with the first embodiment, the embodiment is characterized in that a specific implementation manner for completing a payment transaction by a user is provided, and a specific implementation manner for receiving an access command from a user is further provided. It should be noted that the embodiment can also be used as a refinement on the basis of the second embodiment and the third embodiment to achieve the same technical effect.

A fifth embodiment of the present application relates to a vending method, and the method is applied to the vending device according to any one of the first to fourth embodiments.

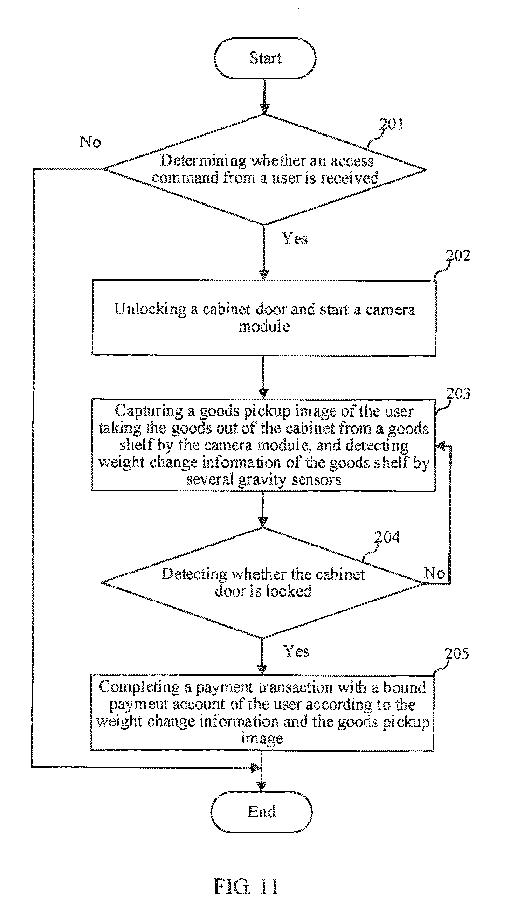

A specific process of the vending method in some embodiments is as shown in FIG. 10.

Step 101: determining whether an access command from a user is received. If yes, go to step 102, otherwise, directly end.

Specifically, the control module 1 determines whether the access command from the user is received, If yes, go to step 102, otherwise, directly end.

Step 102: unlocking a cabinet door and starting a camera module.

Specifically, the control module 1 controls the door lock 22 to be opened, unlocks the cabinet door 3, and starts the camera module at the same time.

Step 103: capturing a goods pickup image of the user taking the goods out of the cabinet from a goods shelf by the camera module.

Specifically, when the user opens the cabinet door 3 and picks up the goods from the goods shelf 5, the goods pickup image of the user taking the goods out of the cabinet from the goods shelf 5 by the camera module 4.

Step 104: detecting whether the cabinet door is locked, if yes, go to step 105, otherwise, go back to the step 103.

Specifically, when the user closes the cabinet door 3, the door lock 22 automatically locks the cabinet door 3. When the control module 1 detects that the cabinet door 3 is locked, it indicates that the user completes the goods pickup and step 105 can be performed, otherwise, it indicates that the user does not complete the goods pickup, the step 103 is performed again, and the goods pickup image of the user continues to be captured by the camera module.

Step 105: completing the payment transaction with a bound payment account of the user at least according to the goods pickup image.

Specifically, the control module 1 obtains the bound payment account of the user from the access command from the user, and completes the payment transaction with the bound payment account at least according to the goods pickup image.

Because the first embodiment corresponds to the embodiment, the embodiment can be implemented in cooperation with the first embodiment. The related technical details mentioned in the first embodiment are still valid in some embodiments, and the technical effects that can be achieved in the first embodiment can further be achieved in some embodiments. In order to reduce repetition, details are not repeated herein. Correspondingly, the related technical details mentioned in some embodiments can also be applied to the first embodiment.

Compared with the prior art, the embodiments of the present application are characterized in that when the access command from the user is received, the cabinet door is unlocked and the camera module is started, so that the goods pickup image of the user taking the goods out of the cabinet from the goods shelf can be captured by the camera module. When it is detected that the cabinet door is locked, it indicates that the user completes the goods pickup, and the payment transaction is completed by the bound payment account of the user at least according to the goods pickup image. Therefore, the user can actually touch and choose the goods needed by the user, take away the goods and close the door to implement automatic settlement, so that a process that the user performs a cash or mobile payment is eliminated. It is very convenient for the user to complete the entire shopping link by only opening the door, picking up the goods, and closing the door, so that shopping experience of the user is improved. In addition, there is no risk of the goods getting stuck.

A sixth implementation of the present application relates to a vending method. The embodiment is an improvement on the basis of the fifth embodiment. The main improvement lies in that the weight change information of the goods shelf is detected by a plurality of gravity sensors.

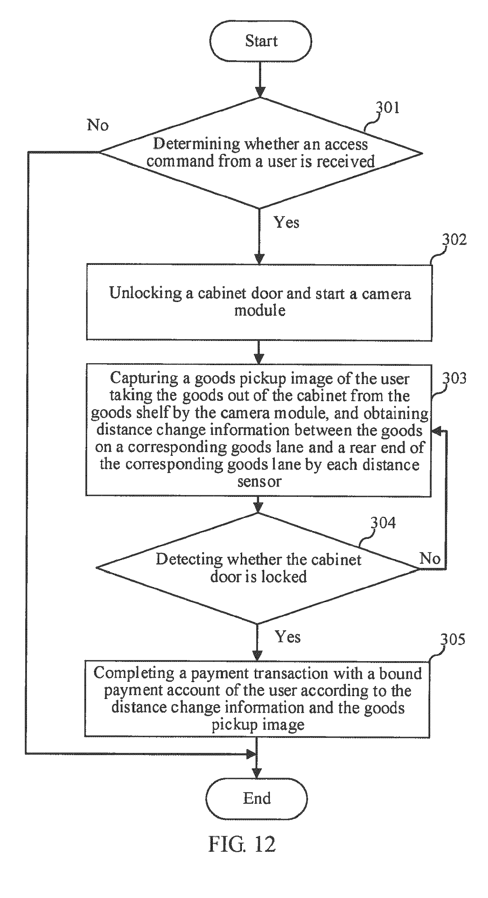

A specific process of the vending method in some embodiments is as shown in FIG. 11. The vending method in some embodiments is applied to the vending device in the second embodiment.

Step 201, step 202, and step 204 are approximately the same as the step 101, the step 102, and the step 104. Details are not repeated herein. The main differences are as follows.

Step 203: capturing the goods pickup image from the user taking the goods out of the cabinet from the goods shelf by the camera module, and detecting the weight change information of the goods shelf by the plurality of gravity sensors.

Specifically, the plurality of gravity sensors is arranged at the bottom of the goods shelf 5, so that the weight change information of the goods shelf 5 can be detected. When the goods pickup image of the user taking the goods out of the cabinet from the goods shelf 5 is captured by the camera module 4, and the weight change information of the goods shelf is detected by the plurality of gravity sensors 7.

Step 205: completing the payment transaction with the bound payment account of the user according to the weight change information and the goods pickup image.

Specifically, during a period in which the cabinet door 3 changes from an unlocked state to a locked state, when the plurality of gravity sensors 7 detect that the weight of the goods shelf 5 is reduced, it indicates that the user takes the goods out from the goods shelf 5. When the plurality of gravity sensors 7 detect that the weight of the goods shelf 5 does not change, it indicates that the user does not take the goods out from the goods shelf 5. In this way, the payment transaction can be completed by the bound payment account of the user according to the weight change information and the goods pickup image.

Because the second embodiment corresponds to the embodiment, the embodiment can be implemented in cooperation with the second embodiment. The related technical details mentioned in the second embodiment are still valid in some embodiments, and the technical effects that can be achieved in the second embodiment can also be achieved in some embodiments. In order to reduce repetition, details are not repeated herein. Correspondingly, the related technical details mentioned in some embodiments can also be applied to the second embodiment.

Compared with the fifth implementation, the embodiment is characterized in that the gravity sensors are arranged at the bottom of the goods shelf to detect the weight change information of the goods shelf. When the weight of the goods shelf decreases, it indicates that the user takes the goods out. The weight change information and the goods pickup image are combined, so that accuracy of determining whether the user takes the goods out is improved.

A seventh implementation of the present application relates to a vending method. The embodiment is an improvement on the basis of the fifth embodiment. The main improvement lies in that the weight change information of the goods shelf is detected by the plurality of gravity sensors.

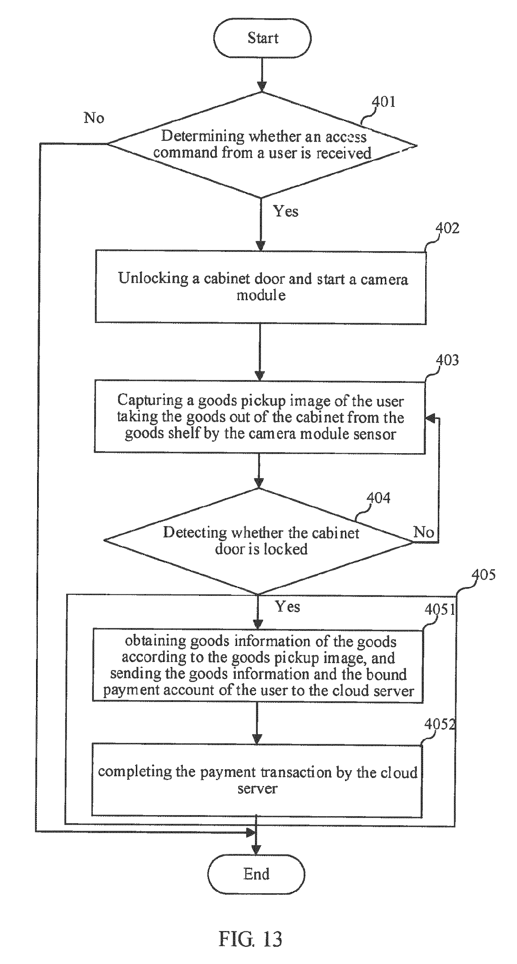

A specific process of the vending method in some embodiments is as shown in FIG. 12. The vending method in some embodiments is applied to the vending device in the third embodiment.

Step 301, step 302, and step 304 are approximately the same as the step 101, the step 102, and the step 104. Details are not repeated herein. The main differences are as follows.

Step 303: capturing the goods pickup image of the user taking the goods out of the cabinet from the goods shelf by the camera module, and obtaining the distance change information between the goods on the corresponding goods lane and the rear end of the corresponding goods lane by each distance sensor.

Specifically, when the goods pickup image of the user taking the goods out of the cabinet from the goods shelf 5 is captured by the camera module 4, the distance sensor 8 arranged at the rear end of each goods lane 51 obtains the distance change information between the goods on the corresponding goods lane 51 and the rear end of the corresponding goods lane 51.

Step 305: completing the payment transaction with the bound payment account of the user according to the distance change information and the goods pickup image.

Specifically, because each goods lane 51 inclines downward toward the cabinet door 3, when one of the goods is taken out, the following goods slide downward under the action of gravity, and a distance between the goods and the rear end of the goods lane 51 increases. That is, when the distance change information obtained by the distance sensor 8 is that the distance increases, it indicates that one of the goods on the goods lane 51 corresponding to the distance sensor 8 is taken out. Otherwise, it indicates that the goods are not taken out. The control module 1 completes the payment transaction with the bound payment account of the user according to the distance change information detected by the plurality of distance sensors 8 and the goods pickup image.

Because the third embodiment corresponds to the embodiment, the embodiment can be implemented in cooperation with the third embodiment. The related technical details mentioned in the third embodiment are still valid in some embodiments, and the technical effects that can be achieved in the third embodiment can also be achieved in some embodiments. In order to reduce repetition, details are not repeated herein. Correspondingly, the related technical details mentioned in some embodiments can also be applied in the third embodiment.

Compared with the fifth implementation, the embodiment is characterized in that the distance sensor is provided at the rear end of each goods lane to collect the distance change information between the rear end of the corresponding goods lane and the goods. When the distance becomes larger, it indicates that the user takes the goods out. The distance change information and the goods pickup image are combined, so that accuracy of determining whether the user takes the goods out is improved. It should be noted that the embodiment can also be used as an improvement on the basis of the sixth embodiment to achieve the same technical effect.

An eighth embodiment of the present application relates to a vending method. The embodiment is a refinement on the basis of the fifth embodiment, and the main refinement is that a specific implementation manner for completing the payment transaction by the user is improved.

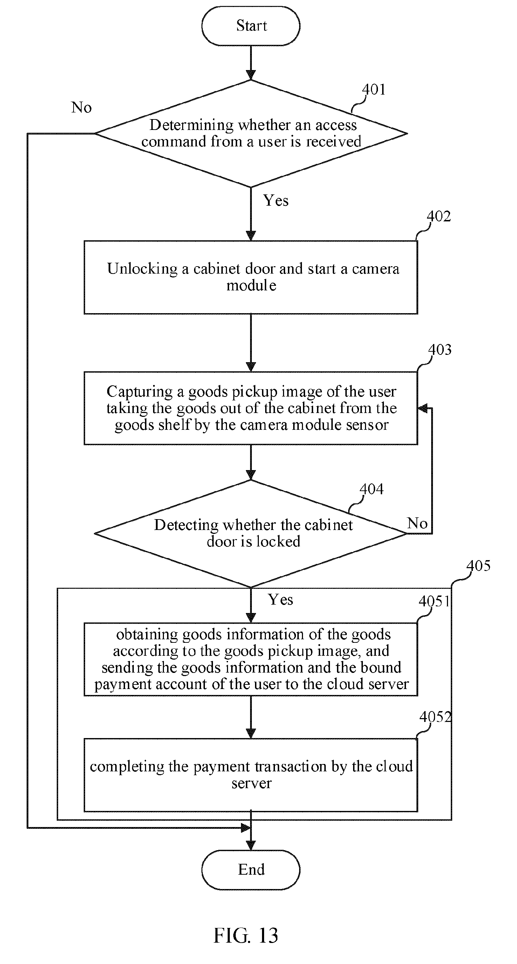

A specific process of the vending method in some embodiments is as shown in FIG. 13. The vending method in some embodiments is applied to the vending device in the fourth embodiment.

Step 401 to step 404 are approximately the same as step 101 to step 104. Details are not repeated herein. The main difference is as follows: step 405: completing the payment transaction with the bound payment account of the user at least according to the goods pickup image, and the step 405 specifically includes the following steps.

Sub-step 4051: obtaining the goods information of the goods according to the goods pickup image, and send the goods information and the bound payment account of the user to the cloud server.

Specifically, the vending device pre-stores images of the goods on sale and corresponding goods information of the goods, and the control module 1 obtains an image of the goods picked up from the goods pickup images, so that the goods information of the goods picked up can be obtained. At the same time, the control module 1 obtains the bound payment account of the user from the access command from the user, and then sends the goods information of the goods picked up and the bound payment account of the user to the cloud server 10.

Sub-step 4052: completing the payment transaction with the cloud server.

Specifically, according to the price of the goods in the goods information, money for buying the goods is deducted from the bound payment account of the user.

Because the fourth embodiment corresponds to the embodiment, the embodiment can be implemented in cooperation with the fourth embodiment. The related technical details mentioned in the fourth embodiment are still valid in some embodiments, and the technical effects that can be achieved in the fourth embodiment can also be achieved in some embodiments. In order to reduce repetition, details are not repeated herein. Correspondingly, the related technical details mentioned in some embodiments can also be applied in the fourth embodiment.

Compared with the first embodiment, the embodiment provides a specific implementation manner for completing a payment transaction with a bound payment account of a user. It should be noted that the embodiment can also be used as a refinement on the basis of the sixth embodiment and the seventh embodiment to achieve the same technical effect.

An embodiment of the present application provides a readable storage medium. The readable storage medium is a non-volatile readable storage medium and includes program codes. When the program codes run on a computing device, the program codes are used to enable the computing device to execute the actions of the above vending method.

Those of ordinary skill in the art can understand that the above embodiments are specific embodiments for implementing the present application, and in actual application, various changes can be made in form and details without departing from the spirit and scope of the present application.

## Claims

1. A vending device, comprising: a control module, a cabinet, at least one cabinet door, and at least one camera module connected to the control module, wherein the cabinet is provided with a goods shelf configured to place goods, and cabinet doors and camera modules are same in number and are in one-to-one correspondence; the cabinet door is connected to the cabinet, when the cabinet door is locked, a user is prohibited from picking up a goods from the goods shelf, and when the cabinet door is unlocked, the user picks up the goods from the goods shelf;
the camera module is installed on an inner wall of the cabinet, and is configured to capture a goods pickup image of the user taking goods out of the cabinet from the goods shelf;
the control module is configured to, when an access command from the user is received, unlock the cabinet door and start the camera module; the control module is further configured to capture the goods pickup image of the user taking the goods out of the cabinet from the goods shelf by the camera module; and
the control module is further configured to complete a payment transaction with a bound payment account of the user at least according to the goods pickup image when detecting that the cabinet door is locked.

2. The vending device according to claim 1, further comprising a plurality of gravity sensors connected to the control module, and the plurality of gravity sensors are arranged at a bottom of the goods shelf;
the plurality of gravity sensors are configured to detect weight change information of the goods shelf; and
the control module is further configured to complete the payment transaction with the payment bound account of the user according to the weight change information and the goods pickup image.

3. The vending device according to claim 1, wherein the goods shelf comprises a plurality of goods lanes; the goods lanes are configured to place the goods; the vending device further comprises a plurality of distance sensors connected to the control module, and the distance sensors and the goods lanes are same in number and are in one-to-one correspondence;
each of the distance sensors is fixed to a rear end of corresponding goods lane, and each of the distance sensors is configured to obtain distance change information between the goods on corresponding goods lane and the rear end of the corresponding goods lane; and
the control module is further configured to complete the payment transaction with the bound payment account of the user according to the distance change information and the goods pickup image.

4. The vending device according to claim 1, wherein the camera module includes two cameras, wherein one of the cameras is arranged at a top end of the inner wall, and the other camera is arranged in a middle of the inner wall; and
lenses of the cameras are non-wide-angle lenses, and an angle between a main optical axis of one of the cameras and the inner wall is in a range of 45 degree to 55 degree, and an angle between a main optical axis of the other camera and the inner wall is in a range of 35 degree to 45 degree.

5. The vending device according to claim 4, wherein a lens angle of each of the cameras is in a range of 16 degree to 49 degree.

6. The vending device according to claim 1, wherein the number of cabinet doors is two, and each of the cabinet doors is rotationally connected to the inner wall of the cabinet.

7. The vending device according to claim 1, further comprising a communication module, and the control module is connected to a cloud server by the communication module, and the control module is configured to obtain goods information of the goods picked up according to the goods pickup image, send the goods information and the bound payment account of the user to the cloud server, and complete the payment transaction with the cloud server.

8. The vending device according to claim 7, further comprising an information input device connected to the control module, and the information input device is fixed to an outer wall of the cabinet; and
the control module is configured to: receive the access command from the user by the information input device, verify the user by the cloud server when the access command is received, unlock the cabinet door and start the camera module when the verification passes.

9. The vending device according to claim 7, wherein the cabinet is further provided with an identification code; and when the user uses a mobile terminal to scan the identification code, the mobile terminal sends login information to the cloud server, the cloud server verifies the login information, and when the verification passes, the access command from the user is sent to the control module by the cloud server.

10. The vending device according to claim 8, wherein the information input device is at least one of following elements: a touch panel, a fingerprint recognition sensor, an iris recognition sensor, a face recognition sensor, or a palm print recognition sensor.

11. A vending method being applied to a vending device, the vending device comprising: a control module, a cabinet, at least one cabinet door, and at least one camera module, and the cabinet provided with a goods shelf configured to place goods; and
the method comprising:
when an access command from a user is received, unlocking the cabinet door and starting the camera module;
capturing, by the camera module, a goods pickup image of the user taking the goods out of the cabinet from the goods shelf; and
when it is detected that the cabinet door is locked, completing a payment transaction with a bound payment account of the user at least according to the goods pickup image.

12. The vending method according to claim 11, the vending device further comprises a plurality of gravity sensors, and the plurality of gravity sensors are arranged at a bottom of the goods shelf;
when the goods pickup image of the user at a vending outlet is captured by the camera module, detecting, by the plurality of gravity sensors, weight change information of the goods shelf; and
the completing a payment transaction with a bound payment account of the user at least according to the goods pickup image comprises:
completing the payment transaction with the bound payment account of the user according to the weight change information and the goods pickup image.

13. The vending method according to claim 11, wherein the goods shelf comprises a plurality of goods lanes; each of the goods lanes is configured to place goods; the vending device further comprises a plurality of distance sensors, and the distance sensors and the goods lanes are same in number and are in one-to-one correspondence;
when the goods pickup image of the user at the vending outlet is captured by the camera module, obtaining, by each of the distance sensors, distance changing information between the goods on the corresponding goods lane and the rear end of the corresponding goods lane; and
the completing a payment transaction with a bound payment account of the user at least according to the goods pickup image comprises:
completing the payment transaction with the bound payment account of the user according to the distance change information and the goods pickup image.

14. The vending method according to claim 11, wherein the vending device further comprises a communication module, and the control module is connected to a cloud server by the communication module;
the completing a payment transaction with a bound payment account of the user at least according to the goods pickup image comprises:
obtaining goods information of the goods according to the goods pickup image, and sending the goods information and the bound payment account of the user to the cloud server; and
completing the payment transaction by the cloud server.

15. A computer storage medium storing a computer program, wherein the program is executed by a processor to implement the the method according to any one of claims 11-14.
